**Europäisches Patentamt**

(19) **European Patent Office**

**Office européen des brevets**

(11) Publication number: **0 241 841**
**B1**

(12) **EUROPEAN PATENT SPECIFICATION**

(45) Date of publication of patent specification: **18.07.90**

(21) Application number: **87105089.4**

(22) Date of filing: **06.04.87**

(51) Int. Cl.⁵: **F 02 D 11/10**

(54) **Throttle valve control device.**

(30) Priority: **04.04.86 JP 78764/86**

(43) Date of publication of application:
**21.10.87 Bulletin 87/43**

(45) Publication of the grant of the patent:
**18.07.90 Bulletin 90/29**

(84) Designated Contracting States:
**DE FR GB**

(56) References cited:
**EP-A-0 154 036**
**US-A-1 669 107**
**US-A-2 987 054**
**US-A-4 304 202**
**US-A-4 401 077**

**PATENT ABSTRACTS OF JAPAN, vol. 3, no. 69
(M-62), 14th June 1979; & JP-A-54 45 468
(HITACHI SEIKO K.K.) 04-10-1979**

(73) Proprietor: **MITSUBISHI DENKI KABUSHIKI
KAISHA
2-3, Marunouchi 2-chome Chiyoda-ku
Tokyo 100 (JP)**

(72) Inventor: **Nishida, Minoru c/o Mitsubishi Denki
K. K.
Product Dev. Lab. 1-1, Tsukaguchi-honmachi
8-chome
Amagasaki-shi Hyogo (JP)**
Inventor: **Katashiba, Hideaki c/o Mitsubishi
Denki K. K.
Product Dev. Lab. 1-1, Tsukaguchi-honmachi
8-chome
Amagasaki-shi Hyogo (JP)**

(74) Representative: **Lehn, Werner, Dipl.-Ing. et al
Hoffmann, Eitle & Partner Patentanwälte
Arabellastrasse 4
D-8000 München 81 (DE)**

Courier Press, Leamington Spa, England.

## Description

### Background of the Invention

This invention relates to a throttle valve control device for a vehicle engine.

A throttle valve control device is being developed as part of the engine control for improving the exhaust gas purifying performance and the economical use of fuel of an engine. In the throttle valve control device, the mechanical connection between the throttle valve and the acceleration pedal is eliminated, and instead an electronic conntrol actuator is employed which controls the operation (opening and closing) of the throttle valve in response to both an electrical signal which is obtained by converting the amount of movement of the accelerating pedal (hereinafter referred to as an accelerating-pedal movement signal, when applicable) and signals (such as an engine speed signal and a gear position signal) representing other engine operating conditions or vehicle running speeds.

In the conventional throttle valve control device with the electronic control actuator, the operation of the throttle valve is controlled by the drive motor which is operated in response to instructions signals from a vehicle controller, which comprises an arithmetic and control circuit adapted to calculate a most suitable degree of opening for the throttle valve according to the signals representing engine operating conditions and vehicle running conditions. Therefore, it is desirable that the device should be equipped with security means for preventing the occurrence that the vehicle is no longer controllable should the electronic control actuator become defective during travelling of the vehicle.

The following examples of security means have been disclosed by Japanese Patent Application (OPI) No. 145867/1980 (the term "OPI" as used herein means "an unexamined published application"):

(1) In the first example, a return spring for returning the throttle valve to the closed position when the control is stopped is provided for the throttle shaft.

(2) In the second example, an electromagnetic clutch is provided to disconnect the throttle shaft from the electronic control actuator when the latter does not work.

(3) In the third example, the return spring and the electromagnetic clutch are combined together in such a manner that the return spring is operated in response to the disconnection of the electromagnetic clutch.

However, the above-described conventional throttle valve control device suffers from the drawback that if the electronic control actuator fails to function, then the vehicle can no longer be moved under its own power and cannot therefore be driven to a garage for repair.

A prior art that has been held to be of interest is US-A-4 304 202 in which a differential gear device is used to control the setting of a throttle valve although this setting can be ignored by the driver by simply depressing the accelerator pedal, the accelerator pedal being capable of opening the throttle valve beyond any setting determined by the differential gear. One input drive to the differential gear is by means of a motor that is driven electronically or by vacuum or by hydraulics to set the throttle valve to give a predetermined cruising speed. The other input drive to the differential gear is derived from the vehicle speedometer as a measurement of the actual speed of the vehicle.

### Summary of the Invention

Accordingly, an object of this invention is to provide a throttle valve control device in which the above-described drawback accompanying a conventional throttle valve control device is elimitated, and which is high both in reliability and in responsibility.

The means by which this is achieved is defined in the accompanying Claim 1.

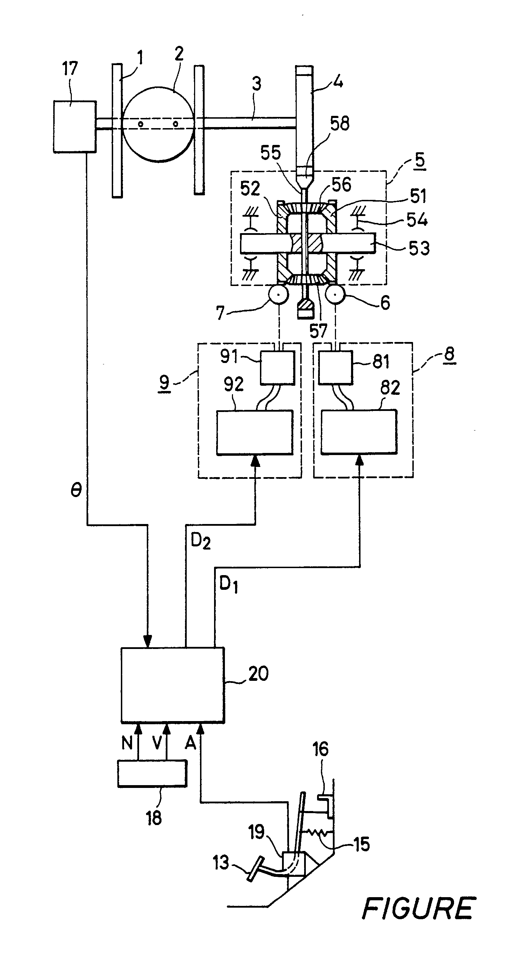

The nature, principle and utility of the invention will become more apparent from the following detailed description when read in conjunction with the accompanying drawing.

### Brief Description of the Drawings

In the accompanying drawings, the single figure is an explanatory diagram, partly as a block diagram, showing the arrangement of one example of a throttle valve control device according to this invention.

### Detailed Description of the Preferred Embodiment

One example of a throttle valve control device according to this invention will be described with reference to the single figure in the accompanying drawing.

In the figure, reference numeral 1 designates an air intake pipe of an engine (not shown); 2, a throttle valve; 3, a valve shaft for operating the throttle valve; 4, a gear mounted on the valve shaft 3; and 5, a differential gear device.

In the differential gear device 5, bevel gears 51 and 52 are rotatably mounted on a shaft 53, and are engaged with first and second drive gears 6 and 7, respectively. The shaft 53 is supported by bearings 54, and a pinion shaft 55 is secured to the shaft 53 in such a manner that the pinion shaft 55 is perpendicular to the shaft 53. Small bevel gears 56 and 57 are mounted on the pinion shaft 55, engage with the bevel gears 51 and 52. Both ends of the pinion shaft 55 are secured to a large gear 58 which rotates the valve shaft 3 of the throttle valve 2 through the gear 4.

The first and second drive gears 6 and 7 are worms, and the cylindrical outer walls of the bevel gears 51 and 52 are formed into worm wheels.

The throttle valve control device of the invention further comprises electronic control actuators 8 and 9. The electronic control actuator 8 is made up of a DC drive motor 81 and a current control circuit 82 for supplying current to the motor 81. Similarly, the electronic control actuator 9 is made up of a DC drive motor 91 and a current control circuit 92 for supplying current to the motor 91. The worms 6 and 7 are rotated by the output shafts of the drive motors 81 and 91, respectively.

Further in the figure, reference numeral 17 designates an opening-degree sensor made up of a potentiometer or the like for detecting a degree of opening of the throttle valve 2, and 20, an arithmetic and control section. The arithmetic and control section 20 receives the output signals of a sensor 18 for detecting an engine operating condition (such as an engine speed N) and a vehicle running condition (such as a vehicle speed V) and the output signal of another sensor 19 for detecting the amount of movement of an accelerating pedal 13, and performs predetermined arithmetic operation using the signals to output a target degree of opening $\theta_t$ (hereinafter referred to as "a target opening degree $\theta_t$" when applicable) for the throttle valve 2, and compares it with the output signal $\theta$ of the opening degree sensor 17, and applies rotation instruction signals $D_1$ and $D_2$ to the electronic control actuators 8 and 9 according to the difference between the two values $\theta_t$ and $\theta$.

Further in the figure, reference numeral 15 designates a return spring provided for the accelerating pedal 13, and 16, a stopper for the accelerating pedal 13.

The operation of the throttle valve control device thus organized will be described.

The torques of the electronic control actuators 8 and 9 are transmitted through the worms 6 and 7 and the worm wheels to the bevel gears 51 and 52, respectively. As a result, with the aid of the small bevel gears 56 and 57 the torques of the electronic control actuators act differentially on the pinion shaft 55 to turn the latter 55 around the shaft 53. The torque of the pinion shaft 55 is transmitted through the large gear 58 to the gear 4 of the throttle valve shaft 3. Therefore, when the drive motors 81 and 91 are so driven that the large bevel gears 51 and 52 are rotated in the same direction, the sums of the drive forces and the speeds of rotation of the gears rotate the throttle valve shaft 3; whereas when the drive motors are so driven that the gears are rotated in opposite directions, the differences between those of the gears rotate the throttle valve shaft 3.

It is assumed that the speeds of rotation of the large bevel gears 51 and 52 are represented by $n_1$ and $n_2$ (including the directions of rotation), respectively (for instance, the clockwise direction as viewed from the right in the figure is "positive", and the counterclockwise direction "negative"), and the speed of rotation of the pinion shaft 55 $n_0$. Then, when the bevel gears are equal to each other in the number of teeth, a relation of $n_0 = (n_1 + n_2)/2$ is established.

In the above-described throttle valve control device, the rotation of the drive motors 81 and 91 are transmitted to the differential gear 5 by means of the worms and the worm wheels. However, the worms and the worm wheels may be replaced by a gear train having a sufficiently high reduction gear ratio with improved efficiency. In this case, the reduction gear ratio should be such that the output shafts of the drive motors are not driven by a drive force from the differential gear device side whether or not the drive motors 81 and 91 are in operation.

For the drive section operating as described above, the arithmetic and control section 20 calculates the target opening degree $\theta_l$, for instance, according to the following expression by using the output A of the sensor 19 (hereinafter referred to as "an acceleration opening degree A", when applicable), the engine speed N, and the vehicle speed V:

$\theta = A (1 + k (V/50 - 1) N)$ where k is the coefficient which is determined for each vehicle so that the operator can smoothly operate the vehicle.

As is apparent from the above expression, the target opening degree $\theta_l$ of the throttle valve 2 becomes larger than the acceleration opening degree A when the vehicle speed V is higher than 50 Km/h and as the engine speed N increases. Therefore, when the vehicle is run at high speed, acceleration of the vehicle can be achieved smoothly. On the other hand, when the vehicle is run at low speed with the vehicle speed V lower than 50 Km/h, the target opening degree $\theta_l$ of the throttle valve 2 is decreased, as a result of which acceleration and deceleration of the vehicle are moderately carried out, with improved drivability.

The arithmetic and control section 20 applies the rotation instruction signals $D_1$ and $D_2$ to the electronic control actuators 8 and 9 so that the difference between the target opening degree $\theta_l$ of the throttle valve 2 calculated according to the above-described expression and the output signal $\theta$ of the opening degree sensor 17 of the throttle valve is zeroed. The contents of the instruction signals $D_1$ and $D_2$ are direction of rotation, energization (rotation), deenergization (stop) and braking depending on the operation modes of the respective drive motors. In the throttle valve control device of the invention, the operation of the throttle valve 2 can be controlled as long as at least one of the electronic control actuators 8 and 9 is operated satisfactorily. When both of the electronic control actuators are operated, the throttle valve is operated quickly: the responsibility is about twice as high as that in the case where only one actuator is in operation.

As was described above, in the throttle valve control device according to the invention, the valve shaft for driving the throttle valve is driven through the differential gear device, the two drive gears of the differential gear device are rotated by the two electronic control actuators including the drive motors, respectively, and the operation of the throttle valve is controlled with the two electronic control actuators while the degree of opening of the throttle valve is being detected. Therefore, the throttle valve control device is high in reliability, low in manufacturing cost, and high in responsibility.

## Claims

1. A throttle valve control device comprising:

a valve shaft (3) for operating a throttle valve (2) adapted to vary the output of an engine.

a differential gear device (5) for driving said valve shaft (3), said differential gear device (5) having first and second drive gears (6, 7);

a first electronic control actuator (8) for rotating said first drive gear (6).

a second electronic control actuator (9) for rotating said second drive gear (7).

an opening degree sensor (17) for detecting the degree of opening of said throttle valve (2).

a sensor (18) for detecting an operating condition of the engine;

a sensor (19) for detecting the amount of movement of an accelerating pedal (13); and

a control section (20) for calculating the degree to which the throttle valve shall be open from information derived from the three aforesaid sensors (17, 18, 19);

the output of the control section (20) being coupled to the first and second electronic control actuators (8,9) so that should one electronic control actuator fail the throttle valve setting continues to be controlled via said differential gear device (5) by the other electronic control actuator.

2. A throttle valve control device as claimed in Claim 1 and comprising first and second drive means (81, 91) rotated respectively by means (82, 92) forming part of said first and second electronic control actuators (8, 9);

the first drive means (81) driving a worm (6) meshing with a first bevel gear (51) of the differential gear device (5); and

the second drive means (91) driving a worm (7) meshing with a second bevel gear (52) of the differential gear device (5).

3. A throttle valve control device as claimed in Claim 2 and wherein the first and second drive means (81, 91) each comprises a DC drive motor; and said means (82, 92) for causing rotation of said drive motors each comprises a current control circuit (82, 92).

## Patentansprüche

1. Eine Drosselklappensteuerungsvorrichtung mit:

einer Klappenwelle (3) zum Betätigen einer Drosselklappe (2), die zum Verändern der Leistung eines Motors vorgesehen ist;

einer Differenzialgetriebevorrichtung (5) zum Antreiben der Klappenwelle (3), wobei die Differenzialgetriebevorrichtung (5) erste und zweite Antriebsgetriebe (6, 7) aufweist;

einer ersten elektronischen Steuerbetätigungsvorrichtung (8) zum Drehen des ersten Antriebsgetriebes (6);

einer zweiten elektronischen Steuerbetätigungsvorrichtung (9) zum Drehen des zweiten Antriebsgetriebes (7);

einem Öffnungsgradsensor (17) zum Erfassen des Öffnungsgrades der Drosselklappe (2);

einem Sensor (18) zum Erfassen eines Betriebszustandes des Motors;

einem Sensor (19) zum Erfassen des Bewegungsbetrages eines Beschleunigungspedales (13); und

einem Steuerabschnitt (20) zum Berechnen des Maßes, um das sich die Drosselklappe öffnen soll, aus einer Information, die von den drei zuvor erwähnten Sensoren (17, 18, 19) abgeleitet wird;

wobei der Ausgang des Steuerabschnittes (20) mit den ersten und zweiten elektronischen Steuerbetätigungsvorrichtungen (8, 9) verbunden ist, so daß im Falle des Ausfallens einer elektronischen Steuerbetätigungsvorrichtung die Drosselklappeneinstellung weiterhin über die Differenzialgetriebevorrichtung (5) durch die andere elektronische Steuerbetätigungsvorrichtung gesteuert wird.

2. Eine Drosselklappensteuerungsvorrichtung nach Anspruch 1, die erste und zweite Antriebseinrichtungen (81, 91) aufweist, die jeweils durch Einrichtungen (82, 92) als Teil der ersten und zweiten elektronischen Steuerbetätigungsvorrichtung (8, 9) gedreht werden;

wobei die erste Antriebseinrichtung (81) eine Schnecke (6) antreibt, die mit einem ersten Kegelrad (51) der Differenzialgetriebevorrichtung (5) kämmt; und

wobei die zweite Antriebseinrichtung (91) eine Schnecke (7) antreibt, die mit einem zweiten Kegelrad (52) der Differenzialgetriebevorrichtung (5) kämmt.

3. Eine Drosselklappensteuerungsvorrichtung nach Anspruch 2, wobei die ersten und zweiten Antriebseinrichtungen (81, 91) jeweils einen Gleichstromantriebsmotor aufweisen; und wobei die Einrichtungen (82, 92) zur Drehung der Antriebsmotoren jeweils einen Stromsteuerschaltkreis (82, 92) aufweisen.

## Revendications

1. Dispositif de commande du papillon des gaz comportant:

un arbre (3) du papillon des gaz pour faire fonctionner un papillon des gaz (2) prévu pour faire varier la puissance de sortie d'un moteur;

un différentiel (5) pour entrainer ledit arbre (3) du papillon des gaz, ledit différentiel (5) comprenant un premier et un second pignons d'entraînement (6, 7);

un premier actionneur de commande électronique (8) pour entraîner en rotation ledit premier pignon d'entraînement (6);

un second actionneur de commande électronique (9) pour entraîner en rotation ledit second pignon d'entraînement (7);

un détecteur de degré d'ouverture (17) pour détecter le degré d'ouverture dudit papillon des gaz (2);

un détecteur (18) pour détecter une condition de fonctionnement du moteur; et

un détecteur (19) pour détecter l'importance du mouvement d'une pédale d'accélération (13); et

une section de commande (20) pour calculer le degré dont s'ouvrira le papillon des gaz à partir de l'information provenant des trois détecteurs susdits (17, 18, 19);

le signal de sortie de la section de commande (20) étant couplé au premier et au second actionneurs de commande électronique (8, 9) de façon que si l'un des détecteurs de commande électronique tombe en panne, la position du papillon des gaz continue à être commandée, par l'intermédiaire dudit différentiel (5), par l'autre actionneur de commande électronique.

2. Dispositif de commande du papillon des gaz selon la revendication 1 et comportant un premier et un second moyens d'entraînement (81, 91) respectivement entraînés en rotation par des moyens (82, 92) faisant partie dudit premier et dudit second actionneurs de commande électronique (8, 9);

le premier moyen d'entraînement (81) entraînant une vis sans fin (6) qui engrène avec un premier pignon conique (51) du différentiel (5); et

le second moyen d'entraînement (91) entraînant une vis sans fin (7) qui engrène avec un second pignon conique (52) du différentiel (5).

3. Dispositif de commande du papillon des gaz selon la revendication 2 et dans lequel le premier et le second moyens d'entraînement (81, 91) comprennent chacun un moteur d'entraînement courant continu; et dans lequel lesdits moyens (82, 92) pour provoquer la rotation desdits moteurs d'entraînement comprennent chacun un circuit de commande du courant (82, 92).

*FIGURE*